# EUROPEAN PATENT SPECIFICATION

(11) **EP 4 556 166 B1**
(45) Date of publication and mention of the grant of the patent: **05.08.2026**
(21) Application number: 23210001.6
(22) Date of filing: 15.11.2023
(51) Int. Cl.: B25F 5/00

(54) **POWER TOOL ECOSYSTEM, AND METHOD TO REDUCE THE USABILITY OF A DEVICE**
ELEKTROWERKZEUGÖKOSYSTEM UND VERFAHREN ZUR REDUZIERUNG DER NUTZBARKEIT EINER VORRICHTUNG
ÉCOSYSTÈME D'OUTIL ÉLECTRIQUE ET PROCÉDÉ POUR RÉDUIRE LA FACILITÉ D'UTILISATION D'UN DISPOSITIF

(43) Date of publication of application: 21.05.2025
(73) Proprietor: Hilti Aktiengesellschaft, 9494 Schaan (LI)
(72) Inventor: Malik, Muhammad Salman, 86159 Augsburg (DE)
(74) Representative: Hilti Aktiengesellschaft Corporate Intellectual Property

(56) References cited:
- US-A1- 2014 339 922
- US-A1- 2017 364 360

## Description

### FIELD OF INVENTION

The present invention relates to a power tool ecosystem and a method to reduce the usability of a target device of a power tool system.

### BACKGROUND OF THE INVENTION

Power tools and their accessories can get lost, misplaced or stolen. This can result in significant losses for workshops or construction companies. Current power tools are mostly cordless power tools and cordless power tool systems comprise power tool, battery, and charger. Physical protection by locking devices away is a common solution against theft, however, it is difficult to ensure a proper locking away on construction sites. Therefore, other methods and systems have been developed.

US 2017/364360 A1, which discloses a method according to the preamble of claim 1 and a power tool ecosystem according to the preamble of claim 11, describes techniques for providing anti-theft protection for power tools by a power tool which disables itself after a predetermined amount of usage time, and re-enables usage only after secure, software-based authentication of the device.

JP2005342796A describes a rechargeable electric tool and means for transmitting a search signal in a rechargeable electric tool in which a battery pack is detachable from the electric tool body. The electric tool main body and the battery pack is provided with notification means for notifying the user in response to the search signal. Specifically, the battery pack is provided with search signal receiving means that operates using the built-in rechargeable battery as a power source and can notify a user by sound or light.

JP4678199B2 describes an authentication unit that transmits or receives information on tool usage to or from an authentication device worn by the user, and a tool usage confirmation output from the authentication unit or the authentication device that performs the authentication operation. A person who does not wear the proper authentication equipment cannot use the power tool.

US10285003B2 describes a power distribution box including a power input, an AC output, a power-line adapter, and a gateway device. The power-line adapter is coupled to the power input and configured to receive power via the power input and to communicate with an external network. The gateway device is coupled to the power-line adapter and includes a wireless network module and a translation controller. The wireless network module is configured to communicate with power tool devices in a wireless network, and the translation controller is coupled to the power-line adapter and enables communications between the wireless network module and the external network through the power-line adapter.

JP2017126560A describes a power tool system and an adapter for the power tool system to prevent theft of a handheld power tool, its battery, and its charger. Each of the handheld power tool and the battery has a passcode. Each passcode is compared, for example, when the battery is attached to the power tool or electrically connected in other ways. When the pass code of the power tool and the battery pack does not match or does not correspond in a predetermined manner, the power tool, or the battery the power tool cannot be operated. Also, a battery charger may have a pass code. The battery and charger passcodes are directly compared, for example, when a battery is attached to a charger for charging. When the pass codes of the battery and the charger do not match or do not correspond, charging of the battery is hindered.

US2014339922A1 describes a battery pack which includes an electrical energy store, a data memory, and an interface for the alternative connection of the battery pack to a data source or a data sink. The data memory is designed to store data from the data source while the interface is connected to the data source, and to supply the data in the data memory to the data sink while the interface is connected to the data sink.

It is one object of the present invention to provide an improved power tool ecosystem and a method to reduce the usability of a target device of a power tool system, thus enabling improved controlling of the use and collaboration of the devices in the power tool ecosystem, in particular, improved or facilitated preparation of power tools, their battery packs and chargers for theft deterrence or measures after theft has happened.

### DISCLOSURE OF THE INVENTION

The invention provides a method to reduce the usability of a target device of a power tool system for a power tool system according to claim 1.

The power tool system is comprising as devices a plurality of power tools, a plurality of exchangeable battery packs and a plurality of chargers. The method is comprising the steps of: selecting, by using a processor, at least one isolating device from one or more devices of the power tool system, which had been plugged to the target device, using information on usage of the one or more devices; sending an isolating command to the at least one isolating device; receiving the isolating command by the at least one isolating device; and disabling or limiting the at least one isolating device in its interactions with the target device and/or disabling or limiting with the at least one isolating device an operation of the target device.

Power tool systems comprise various devices. The devices include several power tools, such as saws, drivers or wrenches, rotary hammers, or drill and screw drivers, several chargers, and several battery packs, which can be plugged to and charged on the chargers, and which can be plugged exchangeably to the power tools. Sometimes devices in such a system get stolen or missing and the intention is to make such a device less useable. The possibility that a stolen device can be made less useable, makes stealing of devices less attractive and deters thieves and receivers of stolen good. Plugging includes also setting up a wireless charging or power supplying connection, e.g., via an inductive connection.

A stolen device may be not directly accessible, e.g., to deactivate the stolen device, e.g., via a mobile communication network. However, an indirect approach via devices, which had been used in the past together with the stolen device, e.g., have been plugged to the stolen device, may still be feasible. E.g., a stolen power tool may not be directly accessible, however, a stolen battery pack which is used together with the stolen power tool may be accessible via a charger connected by a mobile communication network to a backend. Disabling the battery pack by sending an isolating command from the backend to the connected charger makes the stolen battery pack less useable. Transferring a locking command, included in the isolating command, via the stolen battery pack to the stolen power tool, can disable the power tool and making it thus also less useable. To ensure an indirect access, the chargers of the power tool system may be required to connect from time to time to the backend and may disable themselves or may limit their operation, when not connected to the backend in a predefined way, e.g., at a predefined time, time period, charging time, number of charging operations and/or number of charged devices.

Devices of a power tool system work together. A power tool needs a battery pack to work, the battery pack needs a charger, thus the power tool also needs a charger. To restrict the collaboration with devices used together with a target device, makes the target device less useable. E.g., a stolen power tool, as the target device, is used together with two battery packs and two chargers. Disabling any of the two battery packs and two chargers, is an annoyance for any user of the stolen power tool and thus makes the stolen power tool less useable.

A way to find the right devices to make the stolen device less useable is necessary. E.g., disabling all battery packs of a power tool system may make a stolen power tool less useable, however, all other power tools are also rendered useless. To select the right one or more devices, the isolating devices, for making the missing or stolen or otherwise interesting device, i.e., the target device, less useful, information on usage of devices which had been plugged to the target device is used. E.g., if there are several battery packs which had been plugged to a power tool as the target device in the past, however, one of the battery packs was only plugged to the target device and not to other devices, this battery pack might be a good choice as isolating device, and might be disabled, thus rendering the target device less useable. If several battery packs had been plugged to the target device and to other power tools in the past, however, only one battery pack has been plugged to the target device after the target device was reported, the latter battery pack might be a good choice. The selecting may comprise also a determination of the interaction of the at least one isolating device with the target device. The selecting may also comprise routing information, i.e., a way how to forward an isolating command to the isolating device.

To inform an isolating device about its selection, about its future operation or about the target device and its interaction with the target device, the isolating command is sent to the isolating device. The isolating command may be sent directly, e.g., from the backend to the connected charger, e.g., via a wireless or wired communication network, or indirect, e.g., from the backend to a battery pack via the connected charger, when the battery pack is plugged to the connected charger and, e.g., a communication line of the plugging connection is used. The isolating command may also be transferred by the battery pack from the connected charger to a power tool. A battery pack may also have a wireless communication module to receive the isolating command directly from the backend. Upon receiving the isolating command, the isolating device disables or limits its future interactions with the target device and/or disables or limits the operation of the target device, in particular, the next time when connected to the target device. The isolation command may be executed, upon receiving by the isolating device. The execution may happen fully or in parts, at the time of receiving and/or at a later time.

Depending on the target device, whether it is a power tool, a battery pack or a charger, and the selection of the at least one isolating device, whether it is a power tool, a battery pack or a charger, there are options, which may be chosen from, what disabling or limiting may mean. In embodiments disabling or limiting the interactions of the at least one isolating device with the target device or disabling or limiting with the at least one isolating device the interactions of the target device with the devices of the power tool system, when plugged to the target device, comprises alternatively or in combination:
- disabling or limiting a battery pack as the at least one isolating device from supplying power to the target device, if the target device is a power tool, when plugged to it,
- disabling or limiting a battery pack as the at least one isolating device from supplying power to any power tool from the plurality of power tools, when plugged to it,
- disabling or limiting a charger as the at least one isolating device from charging the target device, if the target device is a battery pack, when plugged to it,
- disabling or limiting a charger as the at least one isolating device from charging any battery pack from the plurality of chargers when plugged to it,
- disabling or limiting a power tool as the at least one isolating device from getting supplied with power by the target device, if the target device is a battery pack, when plugged to it,
- disabling or limiting a power tool as the at least one isolating device from getting supplied with power by any battery pack, when plugged to it,
- disabling or limiting the operation of a power tool as the target device by a battery pack as the at least one isolating device, when plugged to it, and
- disabling or limiting the operation of a battery pack as the target device by a charger or a power tool as the at least one isolating device, when plugged to it.

Disabling operation or disabling to supply power or to be supplied with power or to charge or to be charged is a rather strict way for the devices of the power tool system to interact with each other. This might be a way, e.g., for target devices which are known as stolen. Limiting operation or limiting to supply power or to be supplied with power, to charge or to be charged, e.g., to a predefined number of chargings or operations or a predefined level of charging, a predefined period of time or number of operations might be a way for a target device with unclear status.

In embodiments, the using information on usage of the one or more devices comprises using information comprising: a time and/or a duration when the one or more devices have been plugged to the target device, particularly, plugged to the target device in a predefined first period; a number of times the one or more devices have been plugged to the target device, particularly, plugged to the target device in a predefined second period; and/or information, particularly identifiers, on devices other than the target device, the one or more devices have been plugged to, particularly, plugged to in a predefined first period.

Different power tool systems and different devices may have different information for the selecting of the at least one isolating device available. As shown above, already the information which devices have been connected to the target device can help to select the at least one isolating device. Further information, like time, duration, numbers of combined use, shown, e.g., by the number of times devices had been plugged, may improve the selecting. Also, information on other devices, to which potential isolating devices had been plugged, is helpful.

Identifiers of devices may be used for the selecting step. Identifiers of devices of the power tool system may also be used to direct the isolating command to the right device. The devices of the power tool system may have unique identifiers, which they may communicate to other devices when plugged to each other or which they may communicate via wireless or wired connections or networks.

The information on usage may be used in various ways for the selecting. E.g., in embodiments the selecting the at least one isolating device may comprise alternatively or in combination:
- selecting all of the one or more devices which had been plugged to the target device, in particular, selecting of the one or more devices, which had been plugged to the target device, all devices, which have been plugged to the target device in a predefined period,
- selecting from the one or more devices, which have been plugged to the target device, one or more devices, which have been plugged only to the target device, in particular, plugged only to the target device within a predefined third period,
- using for the selecting a ranking of the one or more devices which had been plugged to the target device, the ranking being based on the time, the duration, the number of times and/or the number of the devices other than the target device, and
- using for the selecting a calculation of a likelihood for each of the one or more devices, which had been plugged to the target device, to be connected in the future to the target device.

Depending on the power tool system and the possibilities and requirements of the power tool system, the skilled person may find further adapted ways for the selecting step.

In an embodiment, the target device, for which the usability is intended to be reduced, is reported to the backend, particularly, by a first user with a first input/output system. The reported target device may be communicated from the backend to the first charger. The target device may be determined, e.g., by a backend system, e.g., based on algorithms or an artificial intelligence based determination, an input/output system, or by a user. The user might, e.g., in an asset management system, determine that a device is missing, or a physical inventory might show missing devices. The user can decide which devices he is interested in and report such devices as target device. Such a reporting can be done via an input/output system, such as a personal computer, a smart phone, or a tablet to a backend. An asset management system may be used for the reporting.

In an embodiment, after selecting the at least one isolating device, a message is sent to the first or a second input/output system with information on the at least one isolating device and the first or a second user confirms, exchanges, or rejects the selected at least one isolating device. If an automatic process for the isolating command is not desired, a human intervention may be integrated in the process. A user may confirm the selected isolating device and the process may continue. The user may also exchange the selected isolation device or completely stop the process.

There are various ways to communicate with the devices and in between the devices. A way to enable communication between the devices is by devices which can communicate when plugged to each other. In an embodiment, a first battery pack transfers to the first or a second charger, when plugged to the first or the second charger, a first battery pack identifier, first battery pack usage data, and/or information on devices, the first battery pack had been plugged to. Battery packs of the power tool system may transfer in this way their data to chargers of the power tool system. When plugging the battery packs to chargers and/or power tools, together with the electrical connection for power supply or charging, a communication connection may be established.

Using battery packs as shuttles for data, further, particularly indirect, communication between the devices of the power tool system can be enabled, and data from power tools may be transferred to the chargers.

In an embodiment, the first battery pack receives from a first device, particularly the target device, when plugged to the first device, device data, particularly, the device data comprises a first device identifier, first device usage data, and/or information on devices, the first device had been plugged to. The first battery pack stores the device data, and the first battery pack transfers the device data to the first or the second charger, when plugged to the first or the second charger.

The communication between devices plugged to each other can be used for various cases. In an embodiment, the first and/or a second battery pack receives from the first, the second or a third charger, when plugged to the first, second or the third charger, the isolating command.

In an embodiment, the first and/or the second battery pack disable or limit their interactions with the target device, when the first and/or second battery pack has been selected as the at least one isolating device. Battery packs play a central role in power tool systems, as the battery packs may be used with various chargers and power tools and the power tools require charged battery packs for operation.

In an embodiment, the first and/or the second battery pack store the isolating command and transfer the isolating command to the first or a second device, when plugged to the first or second device. Due to the central role, the battery packs may be used to communicate data and commands to devices which are not plugged to a charger, particularly not plugged to a connected charger.

In an embodiment, the first and/or a second battery pack receive from the first, the second or a third charger, when plugged to the first, second or the third charger, a command to disable or limit the first and/or a second battery pack's operation, when the first and/or the second battery is the target device and the first, second and/or third charger have been selected as isolating devices. Battery packs may also be target devices and thus disabling the operation of a, e.g., stolen, battery pack may be desired.

In an embodiment, the step of selecting is performed on the backend and the backend sends the isolating command to one or more chargers of the power tool system. When the one or more chargers have been selected as the at least one isolating device, the one or more chargers disable or limit their interactions with the target device and/or disable or limit the operation of the target device, when the target device is plugged to the one or more chargers. The one or more chargers may also further transfer the isolating command.

The isolating command may comprise information about the at least one isolating device, e.g., the identifier of the isolating device. Thus, the isolating command may be sent to a charger and the charger will forward it to a battery pack with the identifier of the isolating device. The isolating command may also comprise routing information, e.g., an identifier of a battery pack which may carry the isolating command to a power tool as isolating device. The charger may then transfer the isolating command to the battery pack, which, when connected the next time to the power tool, may transfer the isolating command to the power tool.

In an embodiment, the step of selecting is performed on the first charger and the first charger sends the isolating command to one or more battery packs of the power tool system, which have been selected as the at least one isolating device. These one or more battery packs disable or limit their interactions with the target device and/or disable or limit the operation of the target device, when the target device is plugged to the one or more battery packs. These one or more battery packs may also further transfer the isolating command.

There may be power tool systems where, e.g., the connectivity of the chargers to a backend is problematic. In such a case the selecting may be shifted to chargers. The chargers are a necessary component of the power tool system, which generally may also work without a communication connection to a backend.

Further, the invention provides a power tool ecosystem according to claim 11, which is configured to reduce the usability of a target device of a power tool system. The power tool ecosystem comprises a backend and the power tool system. The power tool system comprises a plurality of power tools, a plurality of exchangeable battery packs and a plurality of chargers as devices. A first charger of the power tool system and/or the backend is configured to select, by using a processor, at least one isolating device from one or more devices of the power tool system, which had been plugged to the target device, using information on usage of the one or more devices. The power tool ecosystem is configured to send an isolating command to the devices. The devices of the power tool system are configured to receive the isolating command. The devices of the power tool system are configured, upon receiving the isolating command, to limit their interactions with the target device. Alternatively or additionally, the devices of the power tool system are configured to limit the interactions of the target device with other devices of the power tool system, when plugged to the target device.

A power tool ecosystem may be configured to support the method to reduce the usability of a target device. Depending on the configuration, a charger of the power tool system and/or the backend is configured to select, by using a processor, at least one isolating device.

In an embodiment, the chargers are communicatively connected via a wired or a wireless connection to the backend and the backend is configured to transfer data to and receive data from the chargers and the chargers are configured to transfer data to and receive data from the backend. The chargers of the power tool system may be used to communicate to the power tool ecosystem beyond the devices of the power tool system and may act as gates for communication into the power tool system. The communication of the chargers may be implemented as a communication module of the charger.

In an embodiment, the chargers are configured to transfer to and receive data from the battery packs when the battery packs are plugged to the chargers. The battery packs are configured to transfer to and receive data from the chargers and the power tools when the battery packs are plugged to the chargers or the power tools. The power tools are configured to transfer to and receive data from the battery packs when the battery packs are plugged to the power tools. The battery packs are configured to store charger data received from the chargers and transfer the charger data to the power tools. The battery packs are further configured to store power tool data received from the power tools and transfer the power tool data to the chargers; and transfer battery pack data, created and/or stored on the battery pack, to the power tools and the chargers.

Within the power tool system, the communication may be implemented by using direct communication connections between devices plugged to each other, particularly, communication connections established together with the electrical connection for supplying power, when plugging the devices together. To transfer data from chargers to power tools, the battery packs may be used as data transfer shuttles.

In an embodiment, the charger data comprises charger, battery pack and/or power tool identifiers, information on location, and/or commands, particularly isolating commands. Various data useful for the described method to reduce the usability of a target device may be transferred from the chargers to the backend.

In an embodiment, the power tool data comprises information on usage, information on location, power tool identifiers, and/or identifiers of battery packs having been plugged to the power tools. Various data useful for the described method to reduce the usability of a target device may be transferred via battery packs to chargers.

In an embodiment, the battery pack data comprises information on usage, information on location, battery pack identifiers, and/or identifiers of power tools having been plugged to the battery packs. Various data useful for the described method to reduce the usability of a target device may be transferred from battery packs to chargers.

Further a computer program product according to claim 15 is proposed with instructions which, when the program is executed by one or more processors in the described power tool ecosystem, cause the power tool ecosystem to carry out the described method to reduce the usability of a target device.

The various embodiments of the method to reduce the usability of a target device may be combined with the use of the embodiments of the disclosed power tool ecosystem.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows in a flowchart a process flow of a method to reduce the usability of a target device;
- Fig. 2: shows a schematic presentation of communication within a power tool ecosystem for a method to reduce the usability of a target device; and
- Fig. 3: shows a schematic presentation of selecting isolating devices.

In the Figures, like reference numerals designate like or functionally equivalent elements, unless otherwise indicated.

### DETAILED DESCRIPTION OF ILLUSTRATIVE EMBODIMENTS

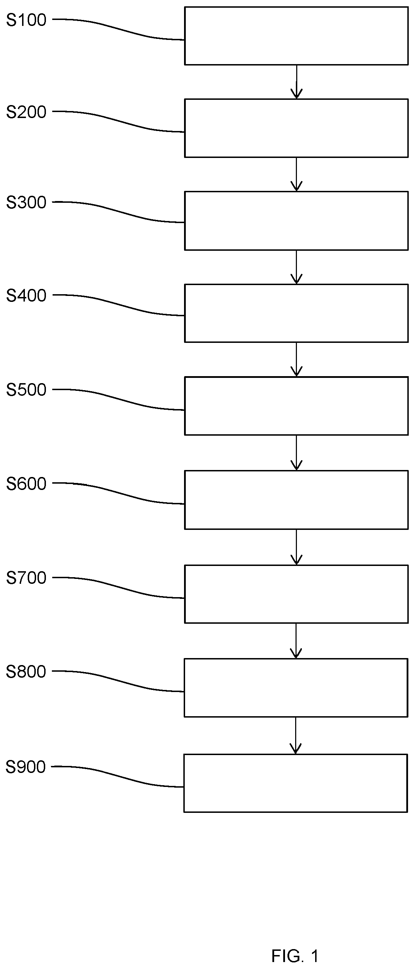

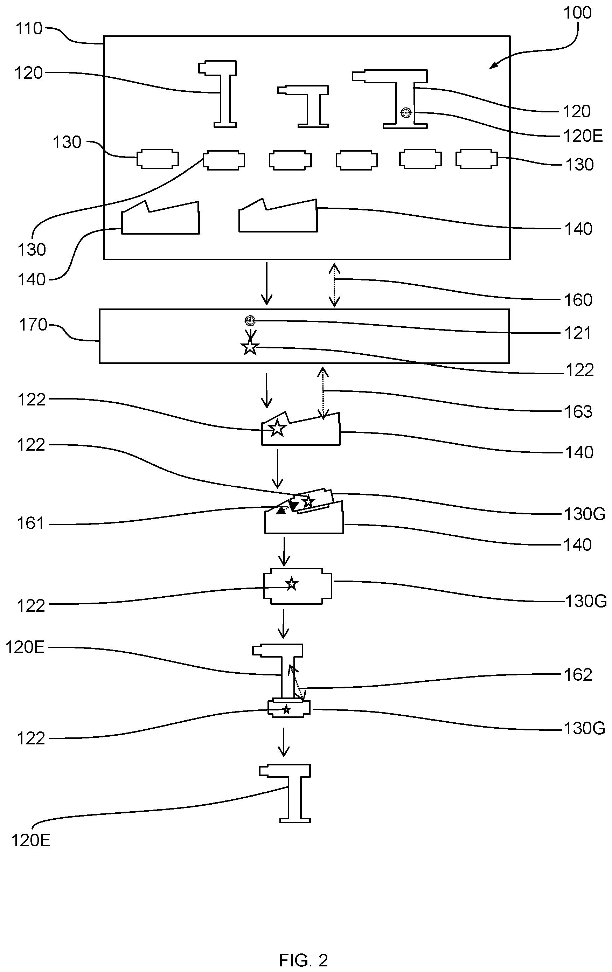

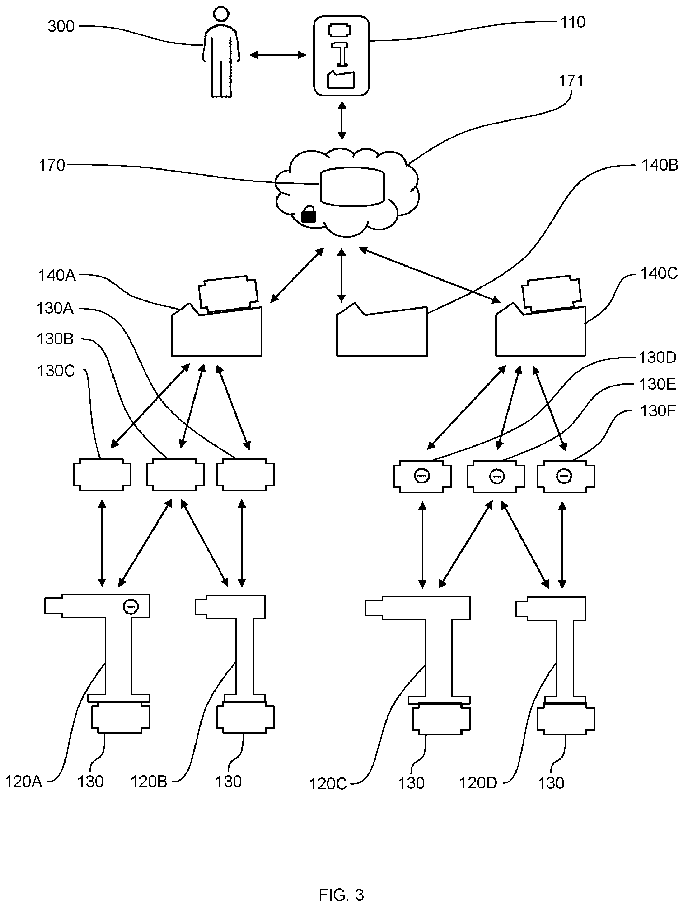

Fig. 1 shows in a flowchart a process flow of a method to reduce the usability of a target device. In step S100, usage data from devices of a power tool system 100 is transferred to a backend 170. This may be implemented as described in more detail with regard to Fig. 2 and 3 below. Chargers 140 transfer data, in particular their own usage data, to the backend 170, when connected to the backend 170. Chargers 140 also transfer data received from battery packs 130, when the battery packs 130 have been plugged to the chargers 140. This data may be stored on the chargers or, if a charger is connected to the backend 170 and plugged to a battery pack 130, the data may be transferred directly to the backend 170. The battery packs 130 transfer own usage data and may transfer usage data from power tools 120 they have been connected to in the past, and which has been stored in a memory of the battery packs 130. The usage data from chargers 140, battery packs 130, and/or power tools 120 is stored in the backend 170. The data may be used for an asset management system to optimize the usage of the devices of the power tool system 100.

In step S200, a user 300 is reporting a target device to the backend 170. The user 300 has seen that a power tool 120 is missing and believes that the power tool 120 has been stolen. The user 300 wants to make the power tool 120 less useable for any third person, preferably disable the power tool 120, and reports the power tool 120 as target device.

In step S300, the backend 170 evaluates the available, stored usage information. This information comprises usage information of the battery packs 130, which had been plugged to the target device, including their interaction with other devices; and the usage information of the chargers 140, which were used to charge the battery packs 130, which had been plugged to the target device. The backend 170 selects, e.g., a battery pack 130 as isolating device, which had been frequently used with the target device in the past and which had been only rarely used with other devices. The backend 170 may use a decision matrix, a decision tree, an algorithm, and/or an artificial intelligence-based agent in the selecting step. In the selecting step S300, the way of interaction of the at least one isolating device with the target device may be determined, e.g., whether the isolating device should be disabled or limited in its interactions with the target device only, or with all devices of the power tool system 100, or whether the isolating device should disable or limit the operation of the target device, e.g., by a lock command. E.g., the battery pack 130, selected as isolating device, should be disabled for supplying power to the target device and should disable the operation of the target device. In the selecting step S300 additionally routing information may be determined, e.g., to find a communication path to the isolating device.

In step S400, the selection of the isolating device and the way of the isolating device to interact with the target device and other devices is sent for approval to the user 300. Particularly, where isolating devices may be disabled or limited in their interaction with devices other than the target device, this might be desired by a user 300.

In step S500, the user 300 approves the results of the selecting step S300. Alternatively, the user 300 may exchange the isolating device, e.g., based on information the user 300 has received from the backend 170, showing alternatives for the isolating device. The user 300 may also stop the process, e.g., because the user 300 has found or was informed about the target device.

In step S600, the isolating command 122, comprising information on the isolating device, the way for the isolating device to interact with the target device, information on the target device, e.g., an identifier of the target device, and/or routing information is sent. The isolating command 122 is, e.g., sent to a charger 140, which has the battery pack 130, which was selected as isolating device, plugged to it and the charger 140 transfers the isolating command 122 to the battery pack 130. Alternatively, the isolating command 122 may be sent to several chargers 140, which had been plugged to the isolating device in the past. The several chargers 140 store the isolating command 122 and transfer the isolating command 122 to the battery pack 130, which was selected as isolating device, when the battery pack 130 is plugged to any of the several chargers 140. The communication of the isolating command 122 within the power tool system 100 is described in more detail with regard to Fig. 2.

The isolating device receives the isolating command 122 in step S700 and, in step S800, the battery pack 130, selected as isolating device, sets its internal settings to not supply power to a power tool 120 with the identifier of the target device.

When plugged at a later time to the target device, the isolating device communicates with the target device and receives the identifier from the target device. With the identifier received, the battery pack 130, selected as isolating device, disables in step S900 the power tool 120, the target device, with a lock command, e.g., sent via a secure connection between the isolating device and the target device, the secure connection required to enable charging of the power tool 120. After sending the lock command, the power tool 120, the target device, stops operating and the isolating device additionally follows its settings and stops supplying power to the target device.

Fig. 2 shows a schematic presentation of communication within a power tool ecosystem for a method to reduce the usability of a target device. In an input/output (I/O) system 110, e.g., a personal computer, a tablet or a smart phone, a user 300 may choose a power tool 120, a battery pack 130 or a charger 140, as a target device. The power tool 120, the battery pack 130 and the charger 140 may have unique identifiers, which may be used to identify the physical power tool 120, battery pack 130 and charger 140. The user 300 choses a specific power tool 120 as target device 120E.

Via an I/O backend communication channel 160, the I/O system communicates information 121, particularly the identifier, about the chosen target device, power tool 120E, to a backend 170 as target device. The backend 170 may be realized as a cloud application or may be hosted on a server of the user. The backend 170 selects an isolating device, e.g., a specific battery pack 130G and sends an isolating command 122. I.e., the backend 170 provides the identifier of the isolating device and the way the isolating device should interact with the target device.

The backend 170 is connected to the chargers 140, over charger communication channels 163. The backend 170 may be connected to the chargers 140 via a secure internet connection and/or via a secure cloud 171. The connection of the chargers 140 to the backend 170 may be permanent or only from time to time. The chargers 140 may buffer data received from battery packs 130 and/or received from the backend 170.

When the isolating device, battery pack 130G, is connected to the charger 140, the charger 140 communicates with the battery pack 130 over a charger battery pack communication channel 161. The charger 140 derives from receiving the identifier of the battery pack 130G, that the battery pack 130G is the isolating device and/or is part of the routing to the isolating device. The charger 140 charges the battery pack 130G and transfers the isolating command 122 to the isolating device, battery pack 130G. The isolating command 122 is stored in the battery pack memory.

The battery pack 130G, having received the isolation command, executes as isolating device the isolation command and changes, e.g., its internal settings, e.g., to disable supplying power to the target device, power tool 120E, for which the identifier has been communicated to the battery pack 130G as part of the isolating command 122.

The battery pack 130G can be removed from the charger 140 for usage in any power tool 120 other than the target device. When the chosen battery pack 130 is attached to the target device, power tool 120E, the power tool 120E and the battery pack 130G communicate over a battery pack power tool communication channel 162, e.g., the two devices exchange their identifiers. During this time, the battery pack 130G may supply the power tool 120E with power. The battery pack 130G receives the identifier of the power tool 120E and derives, that the power tool 120E is the target device. The battery pack 130G will stop supplying power to the power tool 120E. In the end the power tool 120E is not supplied with power from battery pack 130G and is therefore made less useable.

Similarly to the transfer of the information regarding the target device and the isolating command 122, other data and commands may be distributed in the power tool ecosystem between the power tools 120, battery packs 130, and chargers 140 and the backend 170. The communication of data may be downstream from the backend 170 or from the chargers 140 via the battery packs 130 to the power tools 120. The communication may be upstream from the power tools 120, via the battery packs 130 to the chargers 140, and, optionally, to the backend 170. There might be also sideways communication, e.g., a battery pack 130, which is plugged to a first charger 140 and later to a second charger 140, may transfer data from the first to the second charger. Similarly, a first battery pack 130 may transfer data to a power tool 120 and the power tool 120 forwards the data to a second battery pack 130, when later plugged to the second battery pack 130. Various communication paths may be realized in the power tool ecosystem. The devices may comprise memories to store data. The communication may be implemented as secured communication, e.g., using cryptographic technologies.

Fig. 3 shows a schematic presentation of selecting isolating devices. The basic flow of the method to reduce the usability of a target device of a power tool system 100 method has been described above also with regard to Fig. 1 and Fig. 2. A user 300 reports a device of a power tool system 100 as target device, e.g., because the device has been lost or stolen, a user application, e.g., of an asset management system, on an input/output system 110, e.g., a smartphone, tablet, or desktop. The information on about the target device is communicated and stored on a backend 170. The backend 170 may be implemented using a secure cloud 171.

Power tools 120, battery packs 130, and chargers 140 of the power tool system 100 store usage data when they are used with each other. E.g., when a battery pack 130 is used with different power tools 120, it can store identifiers of these power tools 120 and, e.g., how frequently it has been used with these tools, when and for how long. Similarly, a power tool 120 can also store information of battery packs 130, e.g., their identifiers, how long it is used with the battery packs 130 or, in case of multi-battery tools, with which pairs of battery packs 130 it has been used more often. Power tools 120 can transfer to and store this information in battery packs 130 plugged to the power tools 120. Plugged means, particularly, when having established an electrical connection for charging or supplying power. Similarly, chargers 140 can also store information of the battery packs 130 used with them, e.g., their identifiers, how many times they were charged on them, for how long they were charged, but also identifiers of the power tools 120 used with those battery packs 130.

When a battery pack 130 is plugged on a charger 140, the charger 140 reads out the usage data stored on the battery pack 130 and sends this data to the backend 170. The backend 170 evaluates the usage pattern of the target device by using the usage information on devices plugged in the past to a target device, e.g., a lost or stolen power tool 120, and determines isolating devices in the power tool system 100, which may be used to reduce the usability of the target device. E.g., the backend 170 may determine a battery pack 130 or a charger 140 which may be disabled to reduce the usability of the target device.

The backend 170 sends an isolating command 122, e.g., comprising a lock command for the battery back 130, which has been selected as isolation device, to a charger 140, which transfers the isolating command 122 with the lock command to the battery pack 130. The backend 170 can also notify the user 300 that the battery 130 is likely being used with a lost or stolen tool and only trigger the isolating command 122 with the lock command when requested by user 300.

Upon receiving the isolating command 122, the isolating device, battery 130, processes the isolating command 122 and locks, i.e., stops functioning with all power tools 120 or all chargers 140 of the power tool system 100, hence also rendering the battery pack 130 useless in combination with the target tool to be used by the unauthorized persons.

Part of the usage pattern of a lost or stolen power tool 120 can also be the intensity of its usage with battery packs 130 it was plugged to, e.g., how frequently or for how long the power tool 120 has been used with the battery packs 130 over a given time interval. In the case of multi-battery tool, the usage pattern of a lost or stolen power tool 120 can also comprise a particular set of battery packs 130, that have been used with it more often than other battery packs 130, over a given time interval.

The backend 170 may, e.g., lock with the isolating command 122 battery packs 130, that were only used with a lost or stolen power tool. E.g., in Fig. 3, power tool 120A may be reported as target tool, because it is considered as lost or stolen. From usage data, the backend 170 determines that the power tool 120A has been used with battery pack 130B and 130C and locks these battery packs 130. In this case power tool 120B will also not be able to operate with battery pack 130B, which were used in the past in combination. Therefore, there may be power tool systems, which allow for a selective disabling of battery packs 130B, 130C, thus the battery packs 130B, 130C are only disabled for supplying power to the target device, power tool 120A.

The backend 170 may also lock battery packs 130 that were mostly used with the target device, using a threshold that can also be defined by a user 300. E.g., the backend 170 may lock battery packs 130 that have been used 80% of the time with the targe device. Fig. 3, e.g., power tool 120A has been reported as target device, because it is considered lost or stolen. From usage data, the backend 170 can determine that battery 130C was attached to power tool 120A for 100% of the time it has been used with any power tool 120. Battery pack 130C is then selected as isolating device, an isolating command 122 comprising a lock command is sent to battery pack 130C and the battery pack 130C is locked.

There is only access for the backend 170 necessary to the battery packs 130, although the target device is the power tool 120A, to affect the usability of the power tool 120A. A power tool ecosystem allowing such a reduction in usability for the power tools 120, may keep thieves from stealing power tools 120 from the power tool system 100, even if there is no possibility to deactivate stolen power tools 120 themselves. There is always the threat, that the stolen power tools 120 lose their usability, because there are less or no battery packs 130 to supply power to the stolen power tools 120.

The backend 170 may also lock battery packs 130 that were used with the target device with the highest intensity. E.g., in Fig. 3 the power tool 120A is reported as the, e.g., lost or stolen, target device. From usage data, the backend 170 determines that the power tool 120A has been used with battery pack 130C for 10 hours in the last month and with battery pack 130B for only 2 hours. The backend 170 selects battery pack 130C as isolating device, sends the isolating command 122 comprising the lock command to battery pack 130C and locks battery 130C.

The backend 170 may also implement a prioritization mechanism, e.g., disable battery packs 130 used with highest intensity with the target device first. If it is determined that the target device is still used with other battery packs 130, further battery packs 130 may be disabled.

The backend 170 may also disable battery packs 130 that were used with the target device from working with the target device but still allow the battery packs to work with other power tools 120.

The backend 170 may also lock chargers 140 by evaluating their usage with battery packs 130 that were used in combination with a target device. E.g., in Fig. 3, the charger 140A can be selected as isolating device, as the backend 170 can determine from usage data, that battery packs 130B, 130C were charged on charger 140A and these battery packs 130B, 130C were also used with the target device power tool 120A. In this case charger 140A will also not be able to operate with battery pack 130A, which was charged in the past on the charger 140A. Alternatively, there may be power tool system, which allows for a selective disabling of chargers 140 with regard to battery packs 130, e.g., the charger 140A is only disabled for charging the battery packs 130B and 130C.

The user 300 may also report stolen or lost battery packs 130 as target device. The backend 170 may lock chargers 140 or power tools 120 by evaluating their usage with battery packs 130, that were reported as target device by the user 300. E.g., in Fig. 3, battery packs 130D, 130E, 130F are reported as target devices. From usage data, the backend 170 determines that the battery packs 130D, 130E, 130F are used with power tools 120C, 120D and with charger 140C and locks these power tools 120 and chargers 140.

There are also power tool systems 100, which allow a power tool 120 to be disabled, locked, by a battery pack 130 plugged to it. In such a case the user 300 may want to disable a lost or stolen power tool 120 as target device itself. The backend 170 evaluates the usage of battery packs 130 which had been plugged to the target device to determine battery packs 130 that are most likely to be used with the target device and can transfer a lock command to the target device to disable the target device. The backend 170 might optimize the selection based on an assessment of the shortest possible time and/or the highest probability of success. The backend 170 sends the isolating command 122 including a lock command for the target device only to these selected battery packs 130. One of these battery packs 130 may then forward the lock command to the target device, when plugged to it. On receiving the lock command, the target device stops working. E.g., in Fig. 3, the power tool 120A is reported as lost or stolen target device.

From usage data, the backend 170 determines that power tool 120A is used with battery packs 130B, 130C. The backend 170 selects the battery packs 130B, 130C as isolating devices and forward the isolating command 122 comprising a lock command for the power tool 120A to the battery packs 130B, 130C. The backend 170 may forward the isolating command 122 first to battery pack 130C as it was used with tool 120A with highest intensity and only later to battery pack 130B.

Information on target device, such as lost or stolen power tools 120 or battery packs 130 may be stored on the backend 170 together with usage data of power tools 120, battery packs 130 and chargers 140. The backend 170 may also analyze the usage data, select isolating devices, and send isolating commands 120. Transferring the data to the backend 170 may not always be feasible, e.g., sending data via cellular connectivity can be costly, chargers 140 may not always have connectivity to send and receive data, including commands, to and from the backend 170. The chargers 140 may need to buffer this data until connected to the backend 170 again.

Alternatively to the handling of data mainly on the backend 170, there is also the possibility that chargers 140 get updates on target devices from the backend 170. E.g., the chargers 140 may subscribe to updates in lists of target devices from the backend 170. These updates may be scheduled according to needs of the power tool ecosystem, e.g., once a week or when connectivity is available. The chargers 140 receive data from battery packs 130 and locally analyze usage data, select isolating devices, and send isolating commands 120, e.g., to lock power tools 120, battery packs 130, and/or chargers 140, including themselves.

A charger 140 may not be able to fully analyze the usage of devices having been plugged to the target device with information on all battery packs 130, as some battery packs 130 may not be charged on it. However, the charger 140 can analyze locally, select the isolating device locally and send the isolating command 122, including, e.g., a lock command. E.g., the charger 140 may thus lock all battery packs 130 that have been used only with the target device, lock all battery packs 130 that were used with a lost or stolen power tool 120, reported as target device, regularly over several charging cycles, or lock all battery packs 130 that have been used with lost or stolen battery packs 130, reported as target device, for more than a predefined threshold time or period.

For security reasons, isolating commands 120 and/or other communicated date may need to be secured, e.g., signed with ECDSA. In this case, chargers 140 may also act as an intermediate certificate authority (CA) to the backend 170 and sign the isolating commands 120 created by them for power tools 120, battery packs 130 or chargers 140.

A charger 140 may inform the backend 170 to alert the user 300 before sending an isolating command 122. However, by the time the user 300 confirms sending the isolating command 122, battery packs 130 may be unplugged from the charger 140, and the charger 140 will not be able to transfer the isolating command 122 to these battery packs 130. The backend 170 may store the requests by chargers 140 to send isolating commands 120 and if they are approved or not yet approved by a user 300. If they are approved and next time a charger 140 requests the user 300 to approve the isolating command 122 again, the backend 170 can immediately send this approval to the charger 140 on behalf of the user 300.

Although the present invention has been described in accordance with preferred embodiments, it is obvious for the person skilled in the art that modifications within the scope of the invention as defined by the claims are possible in all embodiments.

### REFERENCE NUMERALS

- 100: power tool system
- 110: input/output system
- 120: power tool
- 121: information about target device
- 122: isolating command
- 130: battery pack
- 140: charger
- 160: I/O backend communication channel
- 161: charger battery pack communication channel
- 162: battery pack power tool communication channel
- 163: charger backend communication channel
- 170: backend
- 171: secure cloud
- 300: user

- S100: transfer usage data to backend
- S200: reporting target device to backend
- S300: selecting isolating device
- S400: sending message about isolating device to user
- S500: approving/rejecting/amending isolating device by user
- S600: sending isolating command to isolating device
- S700: receiving isolating command by isolating device
- S800: disabling or limiting operation or interaction of isolating device
- S900: disabling or limiting operation or interaction of target device

## Claims

1. A method to reduce the usability of a target device of a power tool system (100) for a power tool system (100) comprising as devices a plurality of power tools (120), a plurality of exchangeable battery packs (130) and a plurality of chargers (140),
**characterized in that**
the method comprises the steps of:
- selecting (S300), by using a processor, at least one isolating device from one or more devices of the power tool system (100), which had been plugged to the target device, using information on usage of the one or more devices,
- sending (S600) an isolating command (122) to the at least one at least one isolating device,
- receiving (S700) the isolating command (122) by the at least one isolating device, and
- disabling or limiting (S800) the at least one isolating device in its interactions with the target device and/or disabling or limiting (S900) with the at least one isolating device an operation of the target device.

2. The method according to claim 1, wherein disabling or limiting (S800) the interactions of the at least one isolating device with the target device or disabling or limiting (S900) with the at least one isolating device the interactions of the target device with the devices of the power tool system 100, when plugged to the target device, comprises:
- disabling or limiting a battery pack (130) as the at least one isolating device from supplying power to the target device, if the target device is a power tool (120), when plugged to it,
- disabling or limiting a battery pack (130) as the at least one isolating device from supplying power to any power tool (120) from the plurality of power tools (120), when plugged to it,
- disabling or limiting a charger (140) as the at least one isolating device from charging the target device, if the target device is a battery pack, when plugged to it,
- disabling or limiting a charger (140) as the at least one isolating device from charging any battery pack (130) from the plurality of chargers (140) when plugged to it,
- disabling or limiting a power tool (120) as the at least one isolating device from getting supplied with power by the target device, if the target device is a battery pack, when plugged to it,
- disabling or limiting a power tool (120) as the at least one isolating device from getting supplied with power by any battery pack, when plugged to it,
- disabling or limiting the operation of a power tool (120) as the target device by a battery pack (130) as the at least one isolating device, when plugged to it, and/or
- disabling or limiting the operation of a battery pack (130) as the target device by a charger (140) or a power tool (120) as the at least one isolating device, when plugged to it.

3. The method according to claim 1 or 2, wherein the using information on usage of the one or more devices comprises using information comprising:
- a time and/or a duration when the one or more devices have been plugged to the target device, particularly, plugged to the target device in a predefined first period,
- a number of times the one or more devices have been plugged to the target device, particularly, plugged to the target device in a predefined second period, and/or
- information, particularly identifiers, on devices other than the target device, the one or more devices have been plugged to, particularly, plugged to in a predefined first period.

4. The method according to any of claims 1 to 3, wherein the selecting (S300) the at least one isolating device comprises:
- selecting all of the one or more devices which had been plugged to the target device, in particular, selecting of the one or more devices, which had been plugged to the target device, all devices, which have been plugged to the target device in a predefined period,
- selecting from the one or more devices, which have been plugged to the target device, one or more devices, which have been plugged only to the target device, in particular, plugged only to the target device within a predefined third period,
- using for the selecting a ranking of the one or more devices which had been plugged to the target device, the ranking being based on the time, the duration, the number of times and/or the number of the devices other than the target device, and/or
- using for the selecting a calculation of a likelihood for each of the one or more devices, which had been plugged to the target device, to be connected in the future to the target device.

5. The method according to any of claims 1 to 4, further comprising a step of reporting (S200) the target device, for which the usability is intended to be reduced, to the backend (170), particularly, reporting the target device by a first user (300) with a first input/output system (110) to the backend (170), and, optionally, communicating the reported target device from the backend (170) to the first charger.

6. The method according to any of claims 1 to 5, wherein after selecting the at least one isolating device a message is sent (S400) to the first or a second input/output system (110) with information on the at least one isolating device and the first or a second user (300) confirms, exchanges or rejects (S500) the selected at least one isolating device.

7. The method according to any of claims 1 to 6, further comprising
- a first battery pack (130) transferring to the first or a second charger (140), when plugged to the first or the second charger (140), a first battery pack identifier, first battery pack usage data, and/or information on devices, the first battery pack (130) had been plugged to,
optionally further comprising,
- the first battery pack (130) receiving from a first device, particularly the target device, when plugged to the first device, device data, particularly, the device data comprising a first device identifier, first device usage data, and/or information on devices, the first device had been plugged to,
- the first battery pack (130) storing the device data, and
- the first battery pack (130) transferring the device data to the first or the second charger (140), when plugged to the first or the second charger.

8. The method according to any of claims 1 to 7, further comprising
- the first and/or a second battery pack (130) receiving from the first, the second or a third charger (140), when plugged to the first, second or the third charger (140), the isolating command (122),
optionally further comprising,
- the first and/or the second battery pack (130) disabling or limiting their interactions with the target device, when the first and/or second battery pack (130) has been selected as the at least one isolating device, or
- the first and/or the second battery pack (130) storing the isolating command (122) and transferring the isolating command (122) to the first or a second device, when plugged to the first or second device,
or
- the first and/or a second battery pack (130) receiving from the first, the second or a third charger (140), when plugged to the first, second or the third charger (140), a command disabling or limiting the operation of the first or the second battery pack (130), when the first or the second battery pack (130) is the target device and the first, second and/or third charger (140) has been selected as the at least one isolating device.

9. The method according to any of claims 1 to 8, wherein the step of selecting is performed on the backend (170) and the backend (170) sends the isolating command (122) to one or more chargers (140) of the power tool system (100),
- which have been selected as the at least one isolating device and disable or limit their interactions with the target device and/or disable or limit the operation of the target device, when the target device is plugged to the one or more chargers (140),
and/or
- which further transfer the isolating command (122).

10. The method according to any of claims 1 to 8, wherein the step of selecting is performed on the first charger (140) and the first charger (140) sends the isolating command (122) to one or more battery packs (130) of the power tool system (100),
- which have been selected as the at least one isolating device and disable or limit their interactions with the target device and/or disable or limit the operation of the target device, when the target device is plugged to the one or more battery packs (130),
or
- which further transfer the isolating command (122).

11. A power tool ecosystem configured to reduce the usability of a target device of a power tool system (100), comprising
- a backend (170), and
- the power tool system (100), comprising as devices:
- a plurality of power tools (120),
- a plurality of exchangeable battery packs (130) and
- a plurality of chargers (140),
**characterized in that**
- a first charger (140) of the power tool system (100) and/or the backend (170) is configured to select, by using a processor, an at least one isolating device from one or more devices of the power tool system (100), which had been plugged to the target device, using information on usage of the one or more devices,
wherein,
- the power tool ecosystem is configured to send an isolating command (122) to the devices,
- the devices of the power tool system (100) are configured to receive the isolating command (122), and
- the devices of the power tool system 100 configured upon receiving the isolating command (122) to limit their interactions with the target device and/or limit the interactions of the target device with the devices other than the target device of the power tool system (100), when plugged to the target device.

12. The power tool ecosystem according to claim 11, wherein the chargers (140) are communicatively connected via a wired or a wireless connection to the backend (170) and the backend (170) is configured to transfer data to and receive data from the chargers (140) and the chargers (140) are configured to transfer data to and receive data from the backend (170).

13. The power tool ecosystem according to claim 11 or 12, wherein
- the chargers (140) are configured to transfer to and receive data from the battery packs (130), when the battery packs (130) are plugged to the chargers (140),
- the battery packs (130) are configured to transfer to and receive data from the chargers (140) and the power tools (120), when the battery packs (130) are plugged to the chargers (140) or the power tools (120),
- the power tools (120) are configured to transfer to and receive data from the battery packs (130), when the battery packs (130) are plugged to the power tools (120), and
- the battery packs (130) are configured to:
- store charger data received from the chargers (140) and transfer the charger data to the power tools (120),
- store power tool data received from the power tools (120) and transfer the power tool data to the chargers (140), and
- transfer battery pack data, created and/or stored on the battery pack (130), to the power tools (120) and the chargers (140).

14. The power tool ecosystem according to claim 13, wherein
- the charger data comprises charger, battery pack and/or power tool identifiers, information on location, and/or commands, particularly isolating commands (120),
- the power tool data comprises information on usage, information on location, power tool identifiers, and/or identifiers of battery packs (130) having been plugged to the power tools (120), and/or
- the battery pack data comprises information on usage, information on location, battery pack identifiers, and/or identifiers of power tools (120) having been plugged to the battery packs (130).

15. A computer program product comprising instructions which, when the program is executed by one or more processors in the power tool ecosystem of any of claims 11 to 14, cause the power tool ecosystem to carry out the method of any of claims 1 to 10.

## Patentansprüche

1. Verfahren zum Verringern der Verwendbarkeit einer Zielvorrichtung eines Elektrowerkzeugsystems (100) für ein Elektrowerkzeugsystem (100), das als Vorrichtungen mehrere Elektrowerkzeuge (120), mehrere austauschbare Batteriepacks (130) und mehrere Ladegeräte (140) umfasst,
**dadurch gekennzeichnet, dass**
das Verfahren die folgenden Schritte umfasst:
- Auswählen (S300), unter Verwendung eines Prozessors, mindestens einer Trennvorrichtung aus einer oder mehreren Vorrichtungen des Elektrowerkzeugsystems (100), die an die Zielvorrichtung angeschlossen wurden, unter Verwendung von Informationen über eine Verwendung der einen oder der mehreren Vorrichtungen,
- Senden (S600) eines Trennbefehls (122) an die mindestens eine Trennvorrichtung,
- Empfangen (S700) des Trennbefehls (122) durch die mindestens eine Trennvorrichtung, und
- Deaktivieren oder Begrenzen (S800) der mindestens einen Trennvorrichtung bei ihren Interaktionen mit der Zielvorrichtung und/oder Deaktivieren oder Begrenzen (S900) eines Betriebs der Zielvorrichtung mit der mindestens einen Trennvorrichtung.

2. Verfahren nach Anspruch 1, wobei das Deaktivieren oder Begrenzen (S800) der Interaktionen der mindestens einen Trennvorrichtung mit der Zielvorrichtung oder das Deaktivieren oder Begrenzen (S900) der Interaktionen der Zielvorrichtung mit den Vorrichtungen des Elektrowerkzeugsystems 100 mit der mindestens einen Trennvorrichtung bei einem Anschluss an die Zielvorrichtung Folgendes umfasst:
- Deaktivieren oder Begrenzen eines Batteriepacks (130) als die mindestens eine Trennvorrichtung bei der Stromversorgung der Zielvorrichtung bei einem Anschluss daran, falls die Zielvorrichtung ein Elektrowerkzeug (120) ist,
- Deaktivieren oder Begrenzen eines Batteriepacks (130) als die mindestens eine Trennvorrichtung bei der Stromversorgung eines beliebigen Elektrowerkzeugs (120) aus den mehreren Elektrowerkzeugen (120) bei einem Anschluss daran,
- Deaktivieren oder Begrenzen eines Ladegeräts (140) als die mindestens eine Trennvorrichtung beim Laden der Zielvorrichtung bei einem Anschluss daran, falls die Zielvorrichtung ein Batteriepack ist,
- Deaktivieren oder Begrenzen eines Ladegeräts (140) als die mindestens eine Trennvorrichtung beim Laden eines beliebigen Batteriepacks (130) aus den mehreren Ladegeräten (140) bei einem Anschluss daran,
- Deaktivieren oder Begrenzen eines Elektrowerkzeugs (120) als die mindestens eine Trennvorrichtung beim Versorgen desselben mit Strom durch die Zielvorrichtung bei einem Anschluss daran, falls die Zielvorrichtung ein Batteriepack ist,
- Deaktivieren oder Begrenzen eines Elektrowerkzeugs (120) als die mindestens eine Trennvorrichtung beim Versorgen desselben mit Strom durch ein beliebiges Batteriepack bei einem Anschluss daran,
- Deaktivieren oder Begrenzen des Betriebs eines Elektrowerkzeugs (120) als die Zielvorrichtung durch ein Batteriepack (130) als die mindestens eine Trennvorrichtung bei einem Anschluss daran, und/oder
- Deaktivieren oder Begrenzen des Betriebs eines Batteriepacks (130) als die Zielvorrichtung durch ein Ladegerät (140) oder ein Elektrowerkzeug (120) als die mindestens eine Trennvorrichtung bei einem Anschluss daran.

3. Verfahren nach Anspruch 1 oder 2, wobei das Verwenden von Informationen über die Verwendung der einen oder der mehreren Vorrichtungen Verwenden von Informationen umfasst, die Folgendes umfassen:
- eine Zeit und/oder eine Dauer, zu der bzw. für die die eine oder die mehreren Vorrichtungen an die Zielvorrichtung angeschlossen, insbesondere in einem vordefinierten ersten Zeitraum an die Zielvorrichtung angeschlossen wurden,
- eine Anzahl von Malen, die die eine oder die mehreren Vorrichtungen an die Zielvorrichtung angeschlossen, insbesondere in einem vordefinierten zweiten Zeitraum an die Zielvorrichtung angeschlossen wurden, und/oder
- Informationen, insbesondere Kennungen, über andere Vorrichtungen als die Zielvorrichtung, an die die eine oder die mehreren Vorrichtungen angeschlossen, insbesondere in einem vordefinierten ersten Zeitraum angeschlossen wurden.

4. Verfahren nach einem der Ansprüche 1 bis 3, wobei das Auswählen (S300) der mindestens einen Trennvorrichtung Folgendes umfasst:
- Auswählen aller der einen oder der mehreren Vorrichtungen, die an die Zielvorrichtung angeschlossen wurden, insbesondere Auswählen, aus der einen oder den mehreren Vorrichtungen, die an die Zielvorrichtung angeschlossen wurden, aller Vorrichtungen, die in einem vordefinierten Zeitraum an die Zielvorrichtung angeschlossen wurden,
- Auswählen, aus der einen oder den mehreren Vorrichtungen, die an die Zielvorrichtung angeschlossen wurden, einer oder mehrerer Vorrichtungen, die nur an die Zielvorrichtung angeschlossen, insbesondere in einem vordefinierten dritten Zeitraum nur an die Zielvorrichtung angeschlossen wurden,
- Verwenden, für das Auswählen, einer Rangfolge der einen oder der mehreren Vorrichtungen, die an die Zielvorrichtung angeschlossen wurden, wobei die Rangfolge auf der Zeit, der Dauer, der Anzahl von Malen und/oder der Anzahl der anderen Vorrichtungen als der Zielvorrichtung basiert, und/oder
- Verwenden, für das Auswählen, einer Berechnung einer Wahrscheinlichkeit für jede der einen oder der mehreren Vorrichtungen, die an die Zielvorrichtung angeschlossen wurden, in der Zukunft an die Zielvorrichtung angeschlossen zu werden.

5. Verfahren nach einem der Ansprüche 1 bis 4, ferner umfassend einen Schritt zum Berichten (S200) der Zielvorrichtung, für die die Verwendbarkeit verringert werden soll, an das Backend (170), insbesondere Berichten der Zielvorrichtung durch einen ersten Benutzer (300) mit einem ersten Eingabe-/Ausgabesystem (110) an das Backend (170), und optional Kommunizieren der berichteten Zielvorrichtung von dem Backend (170) zu dem ersten Ladegerät.

6. Verfahren nach einem der Ansprüche 1 bis 5, wobei nach dem Auswählen der mindestens einen Trennvorrichtung eine Nachricht an das erste oder ein zweites Eingabe-/Ausgabesystem (110) mit Informationen über die mindestens eine Trennvorrichtung gesendet (S400) wird und der erste oder ein zweiter Benutzer (300) die ausgewählte mindestens eine Trennvorrichtung bestätigt, austauscht oder verwirft (S500).

7. Verfahren nach einem der Ansprüche 1 bis 6, das ferner Folgendes umfasst
- ein erstes Batteriepack (130) überträgt eine erste Batteriepackkennung, erste Batteriepackverwendungsdaten und/oder Informationen über Vorrichtungen, an die das erste Batteriepack (130) angeschlossen wurde, an das erste oder ein zweites Ladegerät (140) bei einem Anschluss an das erste oder das zweite Ladegerät (140),
optional ferner umfassend,
- das erste Batteriepack (130) empfängt Vorrichtungsdaten, insbesondere die Vorrichtungsdaten, die eine erste Vorrichtungskennung, erste Vorrichtungsverwendungsdaten und/oder Informationen über Vorrichtungen umfassen, an die die erste Vorrichtung angeschlossen wurde, von einer ersten Vorrichtung, insbesondere der Zielvorrichtung, bei einem Anschluss an die erste Vorrichtung,
- das erste Batteriepack (130) speichert die Vorrichtungsdaten, und
- das erste Batteriepack (130) überträgt die Vorrichtungsdaten an das erste oder das zweite Ladegerät (140) bei einem Anschluss an das erste oder das zweite Ladegerät.

8. Verfahren nach einem der Ansprüche 1 bis 7, das ferner Folgendes umfasst
- das erste und/oder ein zweites Batteriepack (130) empfangen den Trennbefehl (122) von dem ersten, dem zweiten oder einem dritten Ladegerät (140) bei einem Anschluss an das erste, das zweite oder das dritte Ladegerät (140),
optional ferner umfassend,
- das erste und/oder das zweite Batteriepack (130) deaktivieren oder begrenzen ihre Interaktionen mit der Zielvorrichtung, wenn das erste und/oder das zweite Batteriepack (130) als die mindestens eine Trennvorrichtung ausgewählt wurde, oder
- das erste und/oder das zweite Batteriepack (130) speichern den Trennbefehl (122) und übertragen den Trennbefehl (122) an die erste oder eine zweite Vorrichtung bei einem Anschluss an die erste oder die zweite Vorrichtung,
oder
- das erste und/oder ein zweites Batteriepack (130) empfangen einen Befehl, der den Betrieb des ersten oder des zweiten Batteriepacks (130) deaktiviert oder begrenzt, von dem ersten, dem zweiten oder einem dritten Ladegerät (140) bei einem Anschluss an das erste, das zweite oder das dritte Ladegerät (140), wenn das erste oder das zweite Batteriepack (130) die Zielvorrichtung ist und das erste, das zweite und/oder das dritte Ladegerät (140) als die mindestens eine Trennvorrichtung ausgewählt wurde.

9. Verfahren nach einem der Ansprüche 1 bis 8, wobei der Schritt zum Auswählen an dem Backend (170) durchgeführt wird und das Backend (170) den Trennbefehl (122) an ein oder mehrere Ladegeräte (140) des Elektrowerkzeugsystems (100) sendet,
- die als die mindestens eine Trennvorrichtung ausgewählt wurden und bei einem Anschluss der Zielvorrichtung an das eine oder die mehreren Ladegeräte (140) ihre Interaktionen mit der Zielvorrichtung deaktivieren oder begrenzen und/oder den Betrieb der Zielvorrichtung deaktivieren oder begrenzen,
und/oder
- die den Trennbefehl (122) weiter übertragen.

10. Verfahren nach einem der Ansprüche 1 bis 8, wobei der Schritt zum Auswählen an dem ersten Ladegerät (140) durchgeführt wird und das erste Ladegerät (140) den Trennbefehl (122) an ein oder mehrere Batteriepacks (130) des Elektrowerkzeugsystems (100) sendet,
- die als die mindestens eine Trennvorrichtung ausgewählt wurden und bei einem Anschluss der Zielvorrichtung an das eine oder die mehreren Batteriepacks (130) ihre Interaktionen mit der Zielvorrichtung deaktivieren oder begrenzen und/oder den Betrieb der Zielvorrichtung deaktivieren oder begrenzen,
oder
- die den Trennbefehl (122) weiter übertragen.

11. Elektrowerkzeugökosystem, das dazu ausgelegt ist, die Verwendbarkeit einer Zielvorrichtung eines Elektrowerkzeugsystems (100) zu verringern, das Folgendes umfasst
- ein Backend (170), und
- das Elektrowerkzeugsystem (100), das als Vorrichtungen Folgendes umfasst:
- mehrere Elektrowerkzeuge (120),
- mehrere austauschbare Batteriepacks (130) und
- mehrere Ladegeräte (140),
**dadurch gekennzeichnet, dass**
- ein erstes Ladegerät (140) des Elektrowerkzeugsystems (100) und/oder das Backend (170) dazu ausgelegt ist, unter Verwendung eines Prozessors mindestens eine Trennvorrichtung aus einer oder mehreren Vorrichtungen des Elektrowerkzeugsystems (100), die an die Zielvorrichtung angeschlossen wurden, unter Verwendung von Informationen über eine Verwendung der einen oder der mehreren Vorrichtungen auszuwählen,
wobei,
- das Elektrowerkzeugökosystem dazu ausgelegt ist, einen Trennbefehl (122) an die Vorrichtungen zu senden,
- die Vorrichtungen des Elektrowerkzeugsystems (100) dazu ausgelegt sind, den Trennbefehl (122) zu empfangen, und
- die Vorrichtungen des Elektrowerkzeugsystems 100 dazu ausgelegt sind, bei Empfangen des Trennbefehls (122) bei einem Anschluss an die Zielvorrichtung ihre Interaktionen mit der Zielvorrichtung zu begrenzen und/oder die Interaktionen der Zielvorrichtung mit den anderen Vorrichtungen als der Zielvorrichtung des Elektrowerkzeugsystems (100) zu begrenzen.

12. Elektrowerkzeugökosystem nach Anspruch 11, wobei die Ladegeräte (140) über eine drahtgebundene oder eine drahtlose Verbindung mit dem Backend (170) kommunikativ verbunden sind und das Backend (170) dazu ausgelegt ist, Daten an die Ladegeräte (140) zu übertragen und von diesen Daten zu empfangen, und die Ladegeräte (140) dazu ausgelegt sind, Daten an das Backend (170) zu übertragen und Daten von diesem zu empfangen.

13. Elektrowerkzeugökosystem nach Anspruch 11 oder 12, wobei
- die Ladegeräte (140) dazu ausgelegt sind, bei einem Anschluss der Batteriepacks (130) an die Ladegeräte (140) Daten an die Batteriepacks (130) zu übertragen und von diesen empfangen,
- die Batteriepacks (130) dazu ausgelegt sind, bei einem Anschluss der Batteriepacks (130) an die Ladegeräte (140) oder die Elektrowerkzeuge (120) Daten an die Ladegeräte (140) und die Elektrowerkzeuge (120) zu übertragen und von diesen zu empfangen,
- die Elektrowerkzeuge (120) dazu ausgelegt sind, bei einem Anschluss der Batteriepacks (130) an die Elektrowerkzeuge (120) Daten an die Batteriepacks (130) zu übertragen und von diesen zu empfangen, und
- die Batteriepacks (130) zu Folgendem ausgelegt ist:
- Speichern von Ladegerätedaten, die von den Ladegeräten (140) empfangen wurden, und Übertragen der Ladegerätedaten an die Elektrowerkzeuge (120),
- Speichern von Elektrowerkzeugdaten, die von den Elektrowerkzeugen (120) empfangen wurden, und Übertragen der Elektrowerkzeugdaten an die Ladegeräte (140), und
- Übertragen von Batteriepackdaten, die auf dem Batteriepack (130) erstellt und/oder gespeichert wurden, an die Elektrowerkzeuge (120) und die Ladegeräte (140).

14. Elektrowerkzeugökosystem nach Anspruch 13, wobei
- die Ladegerätedaten Ladegerät-, Batteriepack- und/oder Elektrowerkzeugkennungen, Informationen über einen Standort und/oder Befehle, insbesondere Trennbefehle (120), umfassen,
- die Elektrowerkzeugdaten Informationen über eine Verwendung, Informationen über einen Standort, Elektrowerkzeugkennungen und/oder Kennungen von Batteriepacks (130), die an die Elektrowerkzeuge (120) angeschlossen wurden, umfassen, und/oder
- die Batteriepackdaten Informationen über eine Verwendung, Informationen über einen Standort, Batteriepackkennungen und/oder Kennungen von Elektrowerkzeugen (120), die an die Batteriepacks (130) angeschlossen wurden, umfassen.

15. Computerprogrammprodukt, das Anweisungen umfasst, die, wenn das Programm durch einen oder mehrere Prozessoren in dem Elektrowerkzeugökosystem nach einem der Ansprüche 11 bis 14 ausgeführt wird, bewirken, dass das Elektrowerkzeugökosystem das Verfahren nach einem der Ansprüche 1 bis 10 durchführt.

## Revendications

1. L'invention concerne un procédé de réduction de la facilité d'utilisation d'un dispositif cible d'un système (100) d'outil électrique pour un système (100) d'outil électrique comprenant en tant que dispositifs une pluralité d'outils électriques (120), une pluralité de blocs-batteries échangeables (130) et une pluralité de chargeurs (140),
**caractérisé en ce que**
le procédé comprend les étapes de :
- sélection (S300), en utilisant un processeur, d'au moins un dispositif d'isolement parmi un ou plusieurs dispositifs du système (100) d'outil électrique qui avaient été branchés sur le dispositif cible, en utilisant des informations sur l'usage du ou des dispositifs,
- envoi (S600) d'une consigne (122) d'isolement au(x) dispositif(s) d'isolement,
- réception (S700) de la consigne (122) d'isolement par le ou les dispositifs d'isolement, et
- Inhibition ou limitation (S800) du ou les dispositifs d'isolement dans leurs interactions avec le dispositif cible et/ou Inhibition ou limitation (S900), avec le ou les dispositifs d'isolement, d'un fonctionnement du dispositif cible.

2. Procédé selon la revendication 1, l'inhibition ou la limitation (S800) des interactions du ou des dispositifs d'isolement avec le dispositif cible ou l'inhibition ou la limitation (S900) avec le ou les dispositifs d'isolement des interactions du dispositif cible avec les dispositifs du système (100) d'outil électrique, lorsqu'il est branché sur le dispositif cible, comprenant :
- l'inhibition ou la limitation de l'alimentation, par un bloc-batterie (130) en tant que dispositif(s) d'isolement, du dispositif cible si le dispositif cible est un outil électrique (120), lorsqu'il y est branché,
- l'inhibition ou la limitation de l'alimentation, par un bloc-batterie (130) en tant que dispositif(s) d'isolement, de tout outil électrique (120) de la pluralité d'outils électriques (120), lorsqu'il y est branché,
- l'inhibition ou la limitation de la charge, par un chargeur (140) en tant que dispositif(s) d'isolement, du dispositif cible, si le dispositif cible est un bloc-batterie, lorsqu'il y est branché,
- l'inhibition ou la limitation de la charge, par un chargeur (140) en tant que dispositif(s) d'isolement, de tout bloc-batterie (130) à partir de la pluralité de chargeurs (140) lorsqu'il y est branché,
- l'inhibition ou la limitation de l'obtention, par un outil électrique (120) en tant que dispositif(s) d'isolement, d'une alimentation électrique par le dispositif cible, si le dispositif cible est un bloc-batterie, lorsqu'il y est branché,
- l'inhibition ou la limitation de l'obtention, par un outil électrique (120) en tant que dispositif(s) d'isolement, d'une alimentation électrique par tout bloc-batterie, lorsqu'il y est branché,
- l'inhibition ou la limitation de l'actionnement d'un outil électrique (120) en tant que dispositif cible par un bloc-batterie (130) en tant que dispositif(s) d'isolement, lorsqu'il y est branché, et/ou
- l'inhibition ou la limitation de l'actionnement d'un bloc-batterie (130) en tant que dispositif cible par un chargeur (140) ou un outil électrique (120) en tant que dispositif(s) d'isolement, lorsqu'il y est branché.

3. Procédé selon la revendication 1 ou 2, l'utilisation d'informations sur l'usage du ou des dispositifs comprenant l'utilisation d'informations comprenant :
- un temps et/ou une durée lorsque le ou les dispositifs ont été branchés sur le dispositif cible, en particulier branchés sur le dispositif cible dans une première période prédéfinie,
- un nombre de fois où le ou les dispositifs ont été branchés sur le dispositif cible, en particulier branchés sur le dispositif cible dans une deuxième période prédéfinie, et/ou
- des informations, en particulier des identifiants, sur des dispositifs autres que le dispositif cible, auxquels le ou les dispositifs ont été branchés, en particulier, branchés lors d'une première période prédéfinie.

4. Procédé selon l'une quelconque des revendications 1 à 3, la sélection (S300) du ou des dispositifs d'isolement comprenant :
- la sélection de la totalité du ou des dispositifs qui avaient été branchés sur le dispositif cible, en particulier la sélection, parmi le ou les dispositifs qui avaient été branchés sur le dispositif cible, de tous les dispositifs qui ont été branchés sur le dispositif cible dans une période prédéfinie,
- la sélection, parmi le ou les dispositifs qui ont été branchés sur le dispositif cible, d'un ou de plusieurs dispositifs qui ont été branchés uniquement au dispositif cible, en particulier branchés uniquement au dispositif cible au cours d'une troisième période prédéfinie,
- l'utilisation pour la sélection d'un classement du ou des dispositifs qui avaient été branchés sur le dispositif cible, le classement étant basé sur l'heure, la durée, le nombre de fois et/ou le nombre des dispositifs autres que le dispositif cible, et/ou
- l'utilisation pour la sélection d'un calcul d'une probabilité que le ou chacun des dispositifs qui avaient été branchés sur le dispositif cible soit connecté dans le futur au dispositif cible.

5. Procédé selon l'une quelconque des revendications 1 à 4, comprenant en outre une étape de signalement (S200) du dispositif cible, pour lequel il est prévu de réduire la facilité d'utilisation, à l'arrière-plan (170), en particulier, de signalement à l'arrière-plan (170) du dispositif cible par un premier utilisateur (300) à l'aide d'un premier système (110) d'entrée/sortie, et, éventuellement, la communication du dispositif cible signalé de l'arrière-plan (170) au premier chargeur.

6. Procédé selon l'une quelconque des revendications 1 à 5, dans lequel, après la sélection du ou des dispositifs d'isolement, un message est envoyé (S400) au premier ou au deuxième système (110) d'entrée/sortie avec des informations sur le ou les dispositifs d'isolement et le premier ou le deuxième utilisateur (300) confirme, échange ou rejette (S500) le ou les dispositifs d'isolement sélectionnés.

7. Procédé selon l'une quelconque des revendications 1 à 6, comprenant en outre
- le transfert par un premier bloc-batterie (130) au premier ou à un deuxième chargeur (140), lorsqu'il est branché sur le premier ou le deuxième chargeur (140), d'un premier identifiant de bloc-batterie, de premières données d'usage du bloc-batterie, et/ou d'une information sur des dispositifs auxquels le premier bloc-batterie (130) avait été branché, comprenant en outre, éventuellement
- la réception par le premier bloc-batterie (130) en provenance d'un premier dispositif, en particulier du dispositif cible, lorsqu'il est branché sur le premier dispositif, de données de dispositif, en particulier, les données de dispositif comprenant un premier identifiant de dispositif, des premières données d'usage de dispositif, et/ou des informations sur les dispositifs auxquels le premier dispositif avait été branché,
- le stockage des données de dispositif par le premier bloc-batterie (130), et
- le transfert par le premier bloc-batterie (130) des données de dispositif au premier ou au deuxième chargeur (140), lorsqu'il est branché sur le premier ou au deuxième chargeur.

8. Procédé selon l'une quelconque des revendications 1 à 7, comprenant en outre
- la réception par le premier et/ou un deuxième bloc-batterie (130) en provenance du premier, du deuxième ou d'un troisième chargeur (140), lorsqu'il est branché sur le premier, au deuxième ou au troisième chargeur (140), de la consigne (122) d'isolement, comprenant en outre, éventuellement
- l'inhibition ou la limitation par le premier et/ou le deuxième bloc-batterie (130) de leurs interactions avec le dispositif cible, lorsque le premier et/ou le deuxième bloc-batterie (130) ont été sélectionnés en tant que dispositif(s) d'isolement, ou
- le stockage par le premier et/ou le deuxième bloc-batterie (130) de la consigne (122) d'isolement et le transfert de la consigne (122) d'isolement au premier ou à un deuxième dispositif, lorsqu'il est branché sur le premier ou au deuxième dispositif,
ou
- la réception par le premier et/ou un deuxième bloc-batterie (130) en provenance du premier, du deuxième ou d'un troisième chargeur (140) lorsqu'il est branché sur le premier, au deuxième ou au troisième chargeur (140), d'une commande inhibant ou limitant le fonctionnement du premier ou du deuxième bloc-batterie (130), lorsque le premier ou le deuxième bloc-batterie (130) est le dispositif cible et que le premier, le deuxième et/ou le troisième chargeur (140) ont été sélectionnés en tant que dispositif(s) d'isolement.

9. Procédé selon l'une quelconque des revendications 1 à 8, l'étape de sélection étant effectuée sur l'arrière-plan (170) et l'arrière-plan (170) envoyant la consigne (122) d'isolement à un ou plusieurs chargeurs (140) du système (100) d'outil électrique,
- qui ont été sélectionnés en tant que dispositif(s) d'isolement et inhibent ou limitent leurs interactions avec le dispositif cible et/ou inhibent ou limitent le fonctionnement du dispositif cible, lorsque le dispositif cible est branché sur le ou les chargeurs (140), et/ou
- qui transfèrent en outre la consigne (122) d'isolement.

10. Procédé selon l'une quelconque des revendications 1 à 8, l'étape de sélection étant effectuée sur le premier chargeur (140) et le premier chargeur (140) envoyant la consigne (122) d'isolement à un ou plusieurs blocs-batteries (130) du système (100) d'outil électrique.
- qui ont été sélectionnés en tant que dispositif(s) d'isolement et inhibent ou limitent leurs interactions avec le dispositif cible et/ou inhibent ou limitent le fonctionnement du dispositif cible, lorsque le dispositif cible est branché sur le ou les blocs-batteries (130), ou
- qui transfèrent en outre la consigne (122) d'isolement.

11. Écosystème d'outils électriques configuré pour réduire la facilité d'utilisation d'un dispositif cible d'un système (100) d'outil électrique, comprenant
- un arrière-plan (170), et
- le système (100) d'outil électrique comprenant comme dispositifs :
- une pluralité d'outils électriques (120),
- une pluralité de blocs-batteries échangeables (130) et
- une pluralité de chargeurs (140),
**caractérisé en ce que**
- un premier chargeur (140) du système (100) d'outil électrique et/ou le arrière-plan (170) est configuré pour sélectionner en utilisant un processeur, au moins un dispositif d'isolement parmi un ou plusieurs dispositifs du système (100) d'outil électrique qui avaient été branchés sur le dispositif cible, en utilisant des informations d'utilisation du ou des dispositifs,
dans lequel
- l'écosystème d'outils électriques est configuré pour envoyer une consigne (122) d'isolement aux dispositifs,
- les dispositifs du système (100) d'outil électrique sont configurés pour recevoir la consigne (122) d'isolement, et
- les dispositifs du système (100) d'outil électrique sont configurés, suite à la réception de la consigne (122) d'isolement, pour limiter leurs interactions avec le dispositif cible et/ou limiter les interactions du dispositif cible avec les dispositifs autres que le dispositif cible du système (100) d'outil électrique, lorsqu'ils sont branchés sur le dispositif cible.

12. Écosystème d'outils électriques selon la revendication 11, dans lequel les chargeurs (140) sont connectés en communication via une connexion filaire ou sans fil à l'arrière-plan (170) et l'arrière-plan (170) est configuré pour transférer des données à destination et recevoir des données en provenance des chargeurs (140) et les chargeurs (140) sont configurés pour transférer des données à destination et recevoir des données en provenance de l'arrière-plan (170).

13. Écosystème d'outils électriques selon la revendication 11 ou 12, dans lequel
- les chargeurs (140) sont configurés pour transférer et recevoir des données en provenance des blocs-batteries (130), lorsque les blocs-batteries (130) sont branchés sur les chargeurs (140),
- les blocs-batteries (130) sont configurés pour transférer et recevoir les données en provenance des chargeurs (140) et des outils électriques (120), lorsque les blocs-batteries (130) sont branchés sur les chargeurs (140) ou les outils électriques (120),
- les outils électriques (120) sont configurés pour transférer et recevoir les données en provenance des blocs-batteries (130), lorsque les blocs-batteries (130) sont branchés sur les outils électriques (120) et
- les blocs-batteries (130) sont configurés pour :
- stocker des données de chargeur reçues en provenance des chargeurs (140) et transférer les données de chargeur aux outils électriques (120),
- stocker des données d'outil électrique reçues en provenance des outils électriques (120) et transférer les données d'outil électrique aux chargeurs (140), et
- transférer des données de bloc-batterie, créées et/ou stockées sur le bloc-batterie (130), aux outils électriques (120) et aux chargeurs (140).

14. Écosystème d'outils électriques selon la revendication 13, dans lequel
- les données de chargeur comprennent des identifiants de chargeur, de bloc-batterie et/ou d'outil électrique, des informations de localisation, et/ou des consignes, en particulier des consignes (120) d'isolement.
- les données d'outil électrique comprennent des informations d'usage, des informations d'emplacement, des identifiants d'outil électrique, et/ou des identifiants de blocs-batteries (130) ayant été branchés sur les outils électriques (120), et/ou
- les données de bloc-batterie comprennent des informations d'usage, des informations de localisation, des identifiants de blocs-batteries, et/ou des identifiants d'outils électriques (120) ayant été branchés sur les blocs-batteries (130).

15. Produit-programme informatique comprenant des instructions qui, lorsque le programme est exécuté par un ou plusieurs processeurs dans l'écosystème d'outils électriques selon l'une quelconque des revendications 11 à 14, amènent l'écosystème d'outils électriques à réaliser le procédé selon l'une quelconque des revendications 1 à 10.
